# EUROPEAN PATENT APPLICATION

(11) **EP 2 985 232 A1**
(43) Date of publication of application: **17.02.2016**
(21) Application number: 14180895.6
(22) Date of filing: 13.08.2014
(51) Int. Cl.: B64F 5/00, B64D 11/00

(54) **Method for assembling an aircraft fuselage**

(71) Applicant: Airbus Operations GmbH, 21129 Hamburg (DE)
(72) Inventor: Gorr, Eugen, 21129 Hamburg (DE); Jespersen, Andreas, 21129 Hamburg (DE)
(74) Representative: Maiwald Patentanwalts GmbH

(57) **Abstract**

The invention relates to a method for assembling an aircraft fuselage. The method comprises different steps. In a first step the secondary structural components and interior components are assembled to form a core structure. The core structure comprises a cabin floor (10), side wall panels (20) and ceiling panels. In another step of the method a primary structure (60) is arranged around the core structure to form a part of a fuselage. The invention further relates to an aircraft fuselage which is assembled by the method.

## Description

### Field of the invention

The invention generally relates to the assembly of aircraft fuselages. In particular, the invention relates to a method for assembling an aircraft fuselage and to an aircraft fuselage assembled by the method.

### Background of the invention

In a production process of an aircraft at first the external aerodynamic geometry is defined. The primary structure is manufactured by using lightweight shell structures such that different tube-like segments which can be assembled are provided. The shell structures comprise a tube-like thin skin supported by stringers and frames. Several attachment units are integrated for the system installation, wherein the systems for example comprise air or water pipes. These systems as well as the cabin are installed after the tube-like modules, e. g. fuselage sections have been assembled to the overall aircraft structure. The system components and cabin components are moved into the aircraft via the doors so that the size of the systems and cabin parts is limited. The cabin components are aligned to each other inside the assembled fuselage which requires sophisticated tolerance concepts.

DE 10 2013 114 976 A1 describes a manufacturing method for aircraft fuselages using composite materials.

EP 2 128 017 A1 describes a method for manufacturing a closed composite material structure for aircraft fuselages shaped on a jig.

### Summary of the invention

It is an object of the present invention to provide an enhanced production process for aircraft fuselages.

This object is achieved by the subject-matter of the independent claims. Further exemplary embodiments are evident from the dependent claims and the following description.

According to a first aspect of the present invention, a method for assembling an aircraft fuselage is provided. In a step of the method secondary structural components and interior components are assembled in order to form a core structure, wherein the core structure comprises a cabin floor, side wall panels and ceiling panels. In another step of the method a primary structure is arranged around the core structure to form a part of a fuselage. The aircraft fuselage may be the fuselage of a cargo aircraft or a passenger aircraft. In case of a cargo aircraft, the cabin floor may be the cargo floor on which for instance cargo loading units may be placed. In case of a passenger aircraft, the core structure may further comprise a cargo floor in addition to the cabin floor and/or several overhead stowage compartments for accommodating luggage of the passengers.

The method may also comprise further steps, like for instance manufacturing the cabin floor, the cargo floor or the side wall panels. The fuselage may be a cylindrical or tube-like aircraft fuselage. The secondary structural components and interior components are assembled before assembling the primary structure. In this manner it may be possible to arrange the primary structure around or outside of the secondary structure, which secondary structure comprises at least but is not limited to the cargo floor, the cabin floor, side wall panels, ceiling panels and overhead stowage compartments. For example the secondary structure also comprises struts being arranged between the cargo floor and the cabin floor or other cabin parts like cabin linings or cabin panels. However, the secondary structure comprises at least the secondary structural components. The cabin floor, e. g. the passenger floor describes the area on which the passenger seats can be arranged. Therefore, the cabin floor may comprise integrated seat rails along which the passenger seats can be shifted. The cabin floor may further comprise plates and areas for dedicated access for maintenance. Between the cabin floor and the cargo floor struts may be arranged such that the cabin floor and the cargo floor are connected to each other by the struts, shear walls or other structural means. Interior components may be passenger seats or monuments like for example toilets, galleys, bars, partitions or other sanitary installations. These interior components may also be secondary structural components.

The primary structure may be a truss structure or a framework providing a means for stabilizing the fuselage as a whole. The truss structure for example may be an Iso-Truss structure. The primary structure may comprise stiffening units which are arranged so as to provide an optimal force transmission within the fuselage and to other aircraft parts like for example a cockpit module, a landing gear and an empennage of the aircraft. The empennage, the cockpit module and the fuselage may be manufactured in separate processes.

The advantage of assembling the secondary structure to a core structure before arranging the primary structure around the core structure is that the accessibility to the interior of the cabin or to the cargo compartment is improved during the assembly process. Hence, the cabin components can be manufactured or assembled outside the aircraft such that these assembled components can then be installed or attached within the cabin. In other words, the cabin components or other interior components are not limited in size in contrast to an alternative manufacturing process of the fuselage in which the primary structure is assembled first and the secondary structure as well as interior components are assembled afterwards. This requires that the assembly of the secondary structural components and interior components is conducted within the already assembled primary structure.

Another advantage of assembling the secondary structure first is a reduced effort for tolerance concepts. In other words, the alignment of the secondary structural components can be conducted more easily such that a manual alignment of each component within the already manufactured primary structure is not necessary. However, the invention provides a method in which the alignment of interior components and secondary structural components may be conducted in a later step when the primary structure is attached to the core structure. In this manner, the time for aligning the components of the core structure can be reduced which also reduces the time for manufacturing the whole fuselage.

However, assembling the secondary structure first provides a better access to the interior of the cabin and the cargo compartments from all directions. As a result, the system installation can be conducted more easily. The system installation includes for instance the arrangement of power supply lines, hydraulic lines, fresh air supply lines, bleed air supply lines or controlling devices. As the interior components of the cabin are not limited in size, such components like for example the sidewall panels of the cabin can be completely manufactured and preassembled outside the aircraft cabin, e. g. in an external process. The interchangeability of components and modules which may be necessary due to customer branding can be provided by attaching exchangeable surfaces to these modules or components, e. g. like foils or thin cover panels.

During the assembly of the secondary structural components and interior components to the core structure, the stability is given by the components of the secondary structure and the interior components. These components may be mounted and/or attached to each other by plug-in connections for example. The major part of the stability is given when the primary structure, e. g. the truss structure is attached to the core structure in a later step of the method.

The method may comprise several steps which are described in more detail in the following. A first step may be the arrangement of a center wing box on a jig. The center wing box is identified by a person skilled in the art as the part of the aircraft fuselage to which the wings of the aircraft are mounted. Afterwards, the cabin floor and the cargo floor are arranged on the jig in order to be assembled to each other by means of the struts. In this step the cargo floor and the cabin floor are mounted and/or attached to the center wing box. Both cargo floor and cabin floor may be held in space not only by struts but also by curved ribs or frames. Such curved ribs or frames may be circular segments which are arranged so as to be connected to both cargo floor and cabin floor. The ribs or frames may comprise Omega stiffeners. Additionally, shear walls may be arranged between the cabin floor and the cargo floor extending along the struts and in a longitudinal direction of the core structure. The shear walls which can have the shape of a thin plate may be attached to the struts connecting the cabin floor to the cargo floor. The cargo floor and the cabin floor may comprise attachment points for stiffeners such that the curved ribs or frames can be connected and attached to the cabin floor and the cargo floor by means of these attachments points. The ribs or frames which may be arranged circumferentially around the core structure may also comprise attachment points for attaching the side wall lining (SWL) or side wall panels. Hence, the side wall panels are attached to the ribs or frames and possibly also to the cabin floor which therefore may also comprise attachment points. Before or after the side wall panels are attached to the cabin floor, the monuments are integrated, for example by attaching them to the cabin floor and/or at the side wall panels. In a further step the hatracks, e. g. the overhead stowage compartments (OHSC) are attached to the side wall panels. In yet another step ceiling panels are installed. The ceiling panels are attached by means of quick connections to the side wall panels. By installing the ceiling panels, the required stiffness for the core structure can be provided. In other words, the interior parts, e. g. the cabin parts of the future fuselage, are completely assembled. A cabin floor carpet and the passenger seats can be installed before or after assembling the ceiling panels to the side wall panels and/or to the overhead stowage compartments. The cabin floor, the cargo floor, the side wall panels, the overhead stowage compartments and the ceiling panels together form the core structure. The ribs or frames may also be parts of the core structure.

In another step the system installation can be launched which means that power supply lines, hydraulic lines, fresh air supply lines for the air distribution system, bleed air supply lines, water lines, waste water lines, vacuum lines or controlling devices are integrated into the core structure. The system installation can be conducted from outside the core structure since the outer skin as well as the primary structure and insulation layer are not yet installed. For example, the air distribution system is placed on the side wall panels. Thus, the accessibility for installing the systems to the already assembled components of the core structure is facilitated. One rib or frame may be divided into two or more segments which together form a rib or frame of toroidal shape. The rib or frame encloses the core structure. Therefore, the rib or frame segments can be attached the cabin floor, the cargo floor, the side wall panels, the overhead stowage compartments and/or the ceiling panels in order to provide a better stiffness and hence a better stability for the core structure components. The rib or frame is arranged circumferentially around the core structure. Preferably, the air distribution system is placed near the side wall panels after the ribs and frames are assembled to the core structure.

In another step an insulation layer applied onto the core structure from the outside such that a tube-like or cylindrically shaped body is formed. An insulation may be already integrated in the side wall panels, the overhead stowage compartments and/or the ceiling panels such that the insulation layer is only partly applied to the core structure, e. g. on all areas of the core structure where there is not already an insulation. On the insulation layer a further layer of foam is applied. The foam layer may have several grooves on its surface. The primary structure is inserted into the grooves of the foam layer such that the foam and the primary structure together provide a tube-like or cylindrical surface. The primary structure may be a truss structure, e. g. an iso truss structure, which has the shape of a framework and which is manufactured of composite materials, metal or any other material which is suitable for providing the required stability for the fuselage. The truss structure may be inserted into the grooves by a tape layer process. Moreover, primary structure may comprise stringers and/or ribs being inserted into the grooves. Such stringers and/or ribs may be preassembled outside the grooves or they may be cured after being inserted into the grooves.

It should be mentioned that the grooves may not necessarily be a part of the foam layer. The grooves may also be integrated in the insulation layer such that an additional layer of foam is not needed. The grooves may as well be integrated in the secondary structural components, like for instance in the side wall panels, etc.

An outer skin is attached to the primary structure and/or to the foam layer in a further step such that the assembly of the fuselage is completed. The outer skin represents the outer surface of the fuselage. Afterwards, the cockpit module and the empennage which have been manufactured in a separate process are assembled to the fuselage, e. g to the primary structure of the fuselage.

The primary structure, e. g. truss structure, has a surface which can be directly connected to the outer skin. Furthermore, the outer skin may be a part of the primary structure such that the truss structure and the outer skin form an integral primary structure.

According to an embodiment of the invention, the core structure further comprises a cargo floor, which cargo floor is arranged parallel to the cabin floor and a plurality of overhead stowage compartments which overhead stowage compartments are connected to the side wall panels and/or to the ceiling panels.

According to another embodiment of the invention, an air duct is provided, which air duct comprises a stiffening unit in the longitudinal direction of the core structure. The air duct may be placed along a top side of the core structure so as to be connected to the ceiling panels of the cabin. The air duct may also be a part of the ceiling of the cabin and thus also of the core structure. It should be mentioned that the ceiling is formed by a plurality of ceiling panels and the side wall of the cabin is formed by a plurality of side wall panels.

Furthermore, stiffening segments are provided, wherein the stiffening segments are arranged in a transversal direction of the core structure. The stiffening segments may be circular ribs or frames being arranged along the longitudinal direction of the core structure. In other words, the stiffening segments may enclose the core structure. The stiffening units may be a part of the core structure so as to form a compact cylindrically tube-like shaped body. However, the stiffening units may be an integral part of the core structure such that a compact cylindrically tube-like shaped body with an even surface is formed on which another layer of material can be applied or wrapped. The longitudinal direction may be parallel to a longitudinal direction of the aircraft fuselage, which fuselage is completed after the core structure, the primary structure, the insulation layers, the foam layers and the outer skin have been assembled. Therefore, the core structure and the primary structure form only a part of the fuselage. Each of the secondary structural components forms a part of the core structure and therefore also of the fuselage. The result of the assembly is a fully equipped aircraft fuselage.

According to another embodiment of the invention, an aircraft cockpit module is attached to at least a part of the fuselage.

For example, the aircraft cockpit module may be attached to the primary structure, e. g. to the truss structure. The aircraft cockpit module may further be attached to a front side the core structure by means of attachment units. In order to be attached to the fuselage, the floor of the cockpit may for instance be aligned with the cabin floor. In the same manner, the empennage may be attached to a rear side of the core structure. Cockpit module as well as empennage may be manufactured in a separate process and can thus be attached to the fuselage after the fuselage has completely been assembled.

According to another embodiment of the invention, the cargo floor and the cabin floor are connected and/or attached by means of several struts.

The material of the struts may be manufactured from a material selected from the group comprising metal, composite materials and plastics. Additionally, shear walls can also be placed between the cargo floor and the cabin floor. The shear walls extending along the struts and in the longitudinal direction of the core structure and/or the fuselage may be attached to the struts.

According to another embodiment of the invention, the secondary structural components and/or the interior components are assembled by means of several attachment devices.

The attachment devices are for example integrated in the secondary structural components and/or interior components. When assembling the core structure, the secondary structural components and the interior components are connected to each other via the attachment devices such that every component is held in place or stabilized by means of a neighboring component. In other words, every component of the core structure together with the several attachment devices contributes to the stability of the core structure. An additional support structure can also be provided in order to fasten the core structure as a whole. The support structure may comprise a plurality of ribs or frames being arranged circumferentially around the core structure.

According to another embodiment of the invention, the secondary structural components and/or the interior components are assembled by plug-in connections and/or quick-release connections.

For example such connections are dovetail connections, tapered journals or other connection elements suitable for connecting the interior components or the secondary structural components. It should be mentioned that the connection possibilities for all structural components of the fuselage is not limited to the above mentioned but also extends to other possibilities for connecting such components like for example screw connections, press-fit connections and/or bonding connections.

According to yet another embodiment of the present invention an insulation layer is attached to the core structure in another step.

The insulation layer can be an insulation for reducing the heat transfer through the insulation. The insulation may further be arranged so as to fill the spaces between the ribs and frames of the secondary structure. The insulation layer may be in contact with the side wall panels of the core structure such that the insulation layer is covered for a person looking from the inside of the cabin by components of the core structure and/or the interior. Thus, the insulation layer is attached to the core structure from outside the core structure. The insulation layer may be arranged and/or attached to the core structure such that a smooth and seamless surface around the core structure is developed.

According to another embodiment of the invention, a foam layer is attached to the insulation layer, which foam layer is adapted to receive the primary structure by means of dedicated grooves in the foam layer.

The foam layer may be an adhesive material which is attached to the surface of the insulation layer by establishing an adhesive bonding. The foam layer is applied to the surface of the insulation layer such that a cylindrical or tube-like shaped body is developed, wherein the shape is primarily given by the core structure. The foam layer thus provides a tube-like envelope for the core structure. The foam layer comprises grooves or groove-like recesses which can be milled into the foam layer after the foam layer has been cured. The grooves or groove-like recesses preferably do not reach through the foam layer. Nevertheless, the foam layer may vary in thickness in a longitudinal direction and/or in a circumferential direction around the core structure.

According to another embodiment of the invention, the primary structure is attached to the foam layer after assembling the secondary structural components and interior components.

The primary structure may be a truss structure or a framework. The overall appearance of the truss structure or framework may be tube-like shaped such that it can be attached onto the foam layer. The grooves or groove-like recesses in the foam layer are adapted to receive the primary structure such that a smooth and substantially seamless surface is provided by the foam layer and the primary structure, e. g. the truss structure. The primary structure may be manufactured from a material selected from the group comprising metal, composite materials and synthetic materials. In a preferred embodiment the primary structure is made from carbon fibre reinforced plastics. The primary structure may also comprise different parts. In other words, the primary structure may itself be an assembled body which comprises several parts or segments.

According to another embodiment of the invention, the primary structure is attached to the foam layer after assembling the secondary structural components and interior components.

Hence, the core structure is assembled before applying the insulation layer, the foam layer, the primary structure and the outer skin to the core structure which means that the fuselage is assembled from inside to outside. At first, the cabin parts are assembled in the interior of the core structure and afterwards the housing is assembled around the core structure. In contrast to conventionally built aircraft fuselages, this method provides a better accessibility during the production process of the fuselage and also a better load transmission within the fuselage during flight operation.

According to another embodiment of the invention, the primary structure comprises a truss structure, which truss structure is embedded in the dedicated grooves of the foam layer.

The truss structure may be a force transmission optimized structure. The truss structure may carry a major part of the loads usually occurring during flight operation of an aircraft. The truss structure may be attached to the cockpit module and/or to the empennage as to carry the loads the cockpit module and the empennage are subjected to.

According to yet another embodiment of the invention, the primary structure and the foam layer together provide a seamless surface for an outer skin, which outer skin comprises several layers which are wrapped around the primary structure and/or the foam layer.

The outer skin may thus be manufactured in a tape layer process and/or in a wrapping process. The outer skin may be made from a composite material. The outer skin represents the outer surface of the fuselage and hence also the aerodynamic surface. Therefore, the outer skin is preferably smooth and seamless. The outer skin may further be adapted to receive a coating and/or paint.

According to another embodiment of the invention, the primary structure and the foam layer together provide a surface for an outer skin. The outer skin comprises a plurality of stripes of material which are attached to the outside of the primary structure and/or the foam layer by a tape layer process. The stripes may be flexible fibre mats which during the tape layer process align with the contour of the foam layer.

According to another embodiment of the invention, the outer skin is cured by adjusting predetermined atmospheric conditions. The curing may be conducted using an increased temperature in relation to the environmental temperature. The outer skin may be made from a material comprising resin which requires certain environmental conditions during the curing process.

According to another embodiment of the invention, the core structure, the primary structure, the insulation layer, the foam layer and the outer skin together form the fuselage.

According to the invention, an aircraft fuselage is presented which is assembled by a method for assembling an aircraft fuselage.

In general, the method describes a possibility to assemble an aircraft fuselage from the inside to the outside which provides an easier access to the interior of the cabin during the assembly process, especially for huge cabin components. Thus, huge cabin components can be assembled in a separate process before installing them into the interior of the cabin. In other words, the invention refers to an aircraft cabin as manufacturing support for the fuselage assembly.

The fuselage may have an elliptical or spherical cross section, wherein the cross section of the fuselage is defined as a cut through the fuselage in a direction which is transversal to the longitudinal direction of the fuselage. It is possible that the fuselage may have any shape besides a tube-like shape. For example, the outer shape of the fuselage may comprise a load optimized curvature.

### Brief description of the drawings

Fig. 1 schematically shows the assembly of secondary structural components according to an embodiment of the invention.
Fig. 2 schematically shows a perspective view from the inside of a cabin of an aircraft with secondary structural components and interior components according to an embodiment of the invention.
Fig. 3 schematically shows a perspective view from the outside of a cabin of an aircraft with secondary structural components and interior components according to an embodiment of the invention.
Fig. 4 schematically shows a perspective view in a longitudinal direction of a core structure comprising secondary structural components and interior components according to an embodiment of the invention.
Fig. 5 schematically shows a perspective view of the core structure comprising secondary structural components and interior components according to an embodiment of the invention.
Fig. 6 shows a primary structure according to an embodiment of the invention.
Fig. 7 schematically shows the assembly of an aircraft fuselage according to an embodiment of the invention.
Fig. 8 shows a flow diagram for a method for assembling an aircraft fuselage according to an embodiment of the invention.

### Detailed description of the drawings

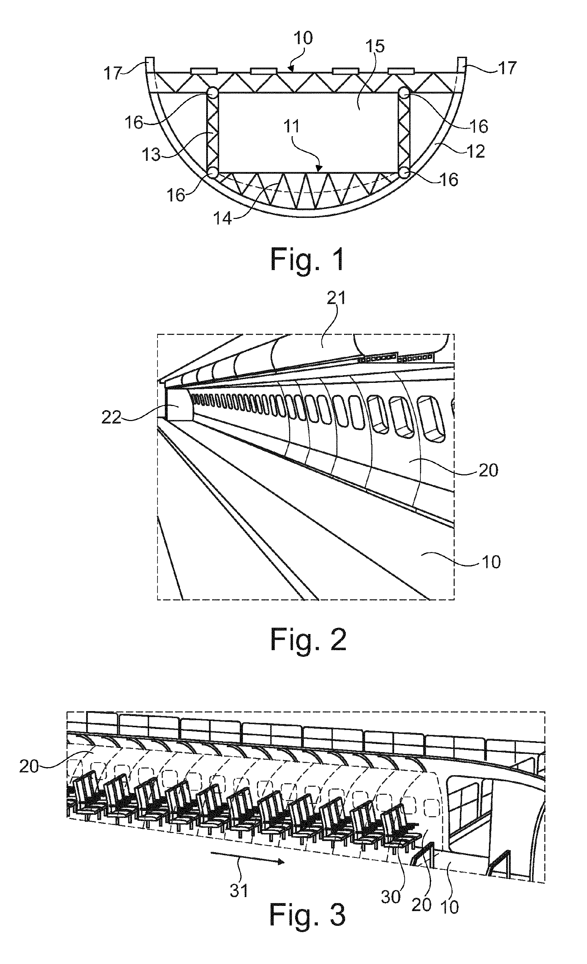

In a first step of the method for assembling an aircraft fuselage, a center wing box is placed on a jig which provides a starting point for the assembly of the aircraft fuselage. Fig. 1 shows the assembly of secondary structural components of the aircraft fuselage and thus indicates another step of the method for assembling an aircraft fuselage. Such secondary structural components are for example a cabin floor 10, a cargo floor 11, ribs or frames 12 and several struts 13. These secondary structural components together with other secondary structural components which are not shown in Fig. 1 and interior components form a core structure. Both cargo floor and cabin floor may be held in space not only by the struts 13 but also by the curved ribs or frames 12. The cabin floor 10 may be connected to the cargo floor 11 via the struts 13. Therefore, the struts 13 as well as the cargo floor 11 and the cabin floor 10 may comprise attachment devices 16. Such attachment devices 16 are for instance plug-in connections or quick-release connections, e. g. dovetail connections or tapered journals. The cabin floor 10 and the cargo floor 11 are assembled with the struts 13 such that a cargo space 15 for accommodating a cargo loading unit is provided. Moreover, shear walls which are not shown in Fig. 1 can be arranged between the cabin floor 10 and the cargo floor 11. The shear walls may be attached at the struts so as to extend along the struts and in a longitudinal direction of the core structure or the future aircraft fuselage. The cargo floor 11 may be connected to the ribs or frames 12 by means of a framework 14. In a first region 17 the cabin floor 10 is connected and attached to the ribs or frames 12. The ribs or frames 12 can therefore be additionally stiffened in the first region 17. The first region 17 also provides attachment points for the side wall lining or side wall panels. The side wall panels are in a further step attached to these attachment points.

The ribs or frames 12 may be arranged circumferentially around the cabin floor 10, the cargo floor 11 and the struts 13. Fig. 1 shows a configuration in which the rib or frame 12 is segmented such that only a part of a circular rib or frame forming a segment of a circle is arranged around the cabin floor 10, the cargo floor 11 and the struts 13. It is possible that several circular ribs or frames 12 are serially arranged in the longitudinal direction of the core structure each of the ribs or frames 12 enclosing at least a part of the cabin floor 10, the cargo floor 11 and the struts 13. The ribs or frames 12 may be secondary structural components and hence also parts of the core structure.

Fig. 2 schematically shows a perspective view from the inside of a cabin of an aircraft. Hence, in another step of the method for assembling the aircraft fuselage further secondary structural components like side wall panels 20, overhead stowage compartments 21 etc. are integrated. The cabin floor 10, the side wall panels 20 and the overhead stowage compartments 21 may be part of the cabin of the future fuselage. The side wall panels 20 are attached to the ribs or frames 12 by means of the attachment points in the first region 17. The side wall panels 20 may also be connected to the cabin floor 10. Many side wall panels 20 which are placed next to each other form a row of side wall panels 20. The row of side wall panels 20 faces another row of side wall panes 20 which is not shown in Fig. 2. The overhead stowage compartments 21 may be attached to each row of the side wall panels 20 and/or to the ribs or frames 12 after the side wall panels 20 have been assembled to the ribs or frames 12. The ceiling which is not shown in Fig. 2 comprises several ceiling panels connecting the opposing overhead stowage compartments 21. In this manner, the ceiling gives the assembly of the cabin parts an enhanced stability and the required stiffness for the next assembly steps. The cabin parts may be connected by plug-in connections.

Fig. 2 also shows the integration of interior components like monuments 22 into the cabin. The interior components and the cabin parts are secondary structural components which together with other secondary structural components like the cargo floor 11, the struts 13 and the ribs or frames 12 form the core structure.

Fig. 3 schematically shows a perspective view from the outside of a cabin of the aircraft fuselage with secondary structural components and interior components. As secondary structural components the side wall panels 20 and the cabin floor 10 can be identified. The side wall panels 20 are serially arranged in two rows in a longitudinal direction of the core structure 31. The longitudinal direction may be parallel to a longitudinal direction of the future aircraft fuselage. Furthermore, passenger seats 30 have been integrated into the cabin. A passenger floor carpet and the passenger seats 30 can be installed in the cabin before or after the ceiling panels are attached to the side wall panels 20, to the ribs or frames 12 and/or to the overhead stowage compartments.

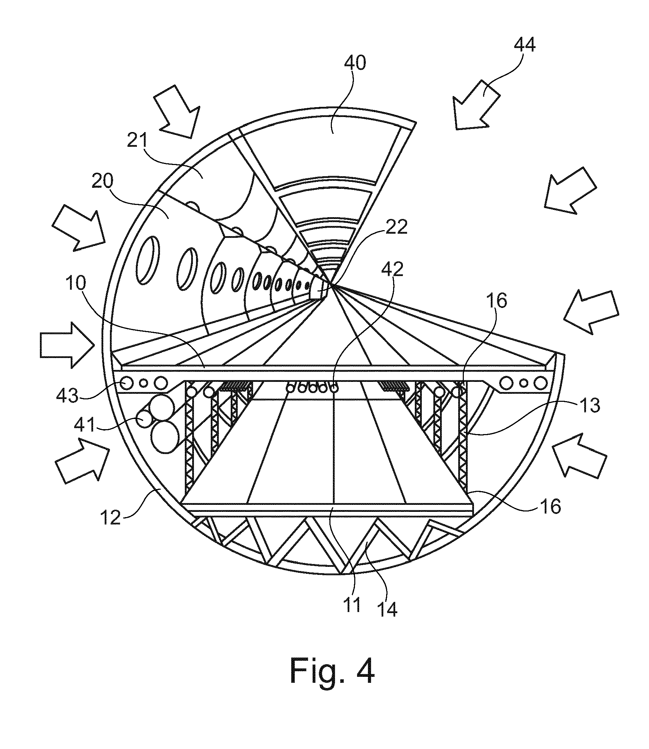

Fig. 4 schematically shows a perspective view in a longitudinal direction of a core structure comprising secondary structural components and interior components. Therein, the secondary structural components and the interior components form the core structure. The core structure comprises the cargo floor 11, the cabin floor 10, the struts 13 being connected to the cabin floor 10 and to the cargo floor 11 via several attachment devices 16, the side wall panels 20, the ribs or fames 12, the overhead stowage compartments 21 and the ceiling panels 40. Other secondary structural components and interior components which are not mentioned or shown in Fig. 4 can also be comprised by the core structure. A framework 14 may be arranged between the ribs or frames 12 and the cargo floor 11. Monuments 22 may also be part of the core structure. The core structure as shown is assembled during the first steps of the method for assembling the aircraft fuselage. The arrows 44 indicate that the system installation may be launched from outside the core structure such that in a later step the insulation and foam layers and the primary structure may as well as an outer skin be attached from outside to the core structure. It should be mentioned that the core structure is assembled before the primary structure is attached to the core structure. In this manner the fuselage can be manufactured from the inside to the outside providing the opportunity to enhance the accessibility to the inside of the cabin or to secondary structural elements of the core structure during the manufacturing process.

Fig. 4 also shows that systems like power supply lines 43, hydraulic lines 42, bleed air supply lines or fresh air supply lines 41 are integrated before attaching the primary structure to the core structure. Hence, the systems may also be defined as parts of the core structure.

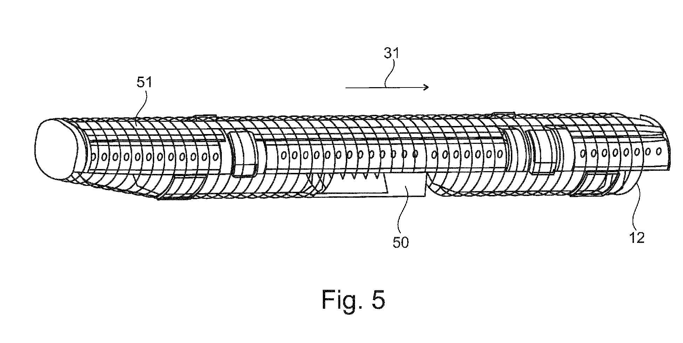

Fig. 5 schematically shows a perspective view the core structure comprising secondary structural components and interior components according to an embodiment of the invention. The keel beam and the center wing box 50 are placed on a jig in a first step of the method for assembling an aircraft fuselage such that the assembly of the secondary structural components and the interior components can be started in a subsequent step. The core structure may comprise the ribs or frames 12 which in a preferred embodiment are arranged circumferentially around the secondary structural components. The ribs or frames 12 can be segmented such that after assembling the segments, the ribs or frames 12 have the shape of a closed circuit. As shown in Fig. 5, several ribs or frames 12 may be arranged in the longitudinal direction of the core structure 31. A rib or frame 12 or a segment thereof may therefore extend in a direction perpendicular to the longitudinal direction of the core structure 31. The several ribs or frames 12 together give the impression of a tube-like shaped body that encloses the secondary structural components and the interior components of the core structure which if assembled also has a tube-like shape. An upper center air duct 51 extending in the longitudinal direction of the core structure 31 can be arranged at a top side of the cabin. This upper center air duct 51 may serve as a stiffening means in the longitudinal direction of the core structure 31. Each of the components shown in Fig. 5 contributes to the stability of the arrangement of the secondary structural components and the interior components and hence of the core structure.

It should be mentioned that the whole core structure can also be segmented in more than one core structure such that two or more core structure segments are manufactured separately. These core structure segments can be connected to each other before the primary structure is attached. In other words the core structure segments are connected to each other and afterwards the primary structure is attached to the connected core structure segments. A separation into different core structure segments can be defined at the center wing box such that two core structure segments are manufactured separately before connecting them in order to attach the primary structure to the connected core structure segments.

After the core structure is assembled and the systems are integrated, an insulation layer is applied to the core structure such that the insulation layer encloses the core structure. In the same manner, a foam layer is applied to the insulation layer, wherein the foam layer has grooves incorporated which are adapted to receive the primary structure. In a further step a window belt may be placed on a dedicated position of the core structure before the primary structure is attached to the core structure.

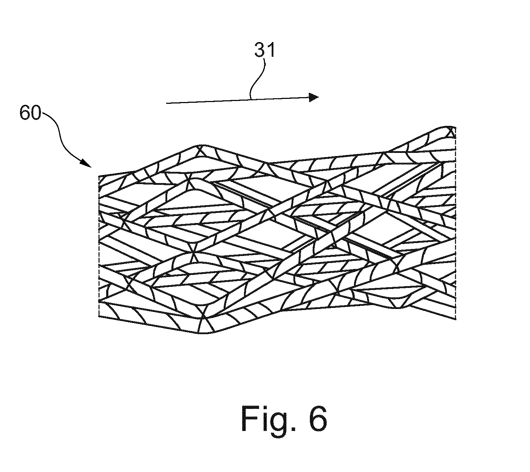

Fig. 6 shows a primary structure 60 which for example is a truss structure. The truss structure may be a framework which is optimized with respect to force and load transmission within the fuselage of the aircraft. The truss structure can thus be used instead of conventional stringers and ribs as primary structure of an aircraft. The truss structure is placed in the dedicated grooves inside the foam layer so that the foam is used as a fixation means of the load optimized truss structure.

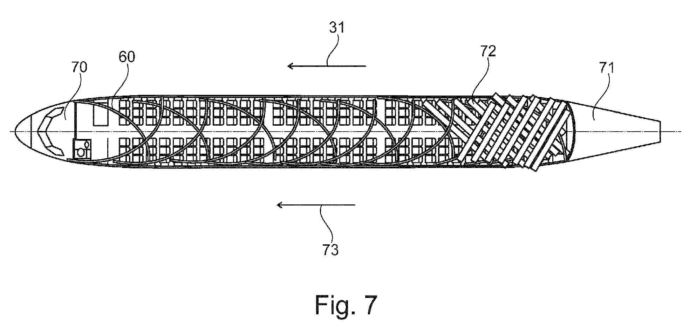

Fig. 7 schematically shows the assembly of an aircraft fuselage. After the primary structure 60 is attached to the core structure, an outer skin 72 is manufactured onto the primary structure. The primary structure and the foam layer together provide a surface for the outer skin 72, which outer skin 72 comprises several layers which are wrapped around the primary structure 60 and/or the foam layer. The outer skin 72 may also be manufactured in a tape layer process in which a plurality of stripes of material is attached to the outside of the primary structure and/or the foam layer. The outer skin 72 may be manufactured from a material selected from the group comprising composite materials, synthetic materials or other flexible materials. For example the outer skin 72 is made of carbon fibre reinforced plastics and/or glass-fibre composite material.

After assembling the aircraft fuselage, a cockpit module 70 and an empennage 71 are assembled to the core structure and/or to the primary structure in another step. The assembly is conducted such that the fuselage, the cockpit module 70 and the empennage 71 are serially arranged in the longitudinal direction of the fuselage 73 which for instance is parallel to the longitudinal direction of the core structure 31. The cockpit module 70 and the empennage 71 may be manufactured in separate processes.

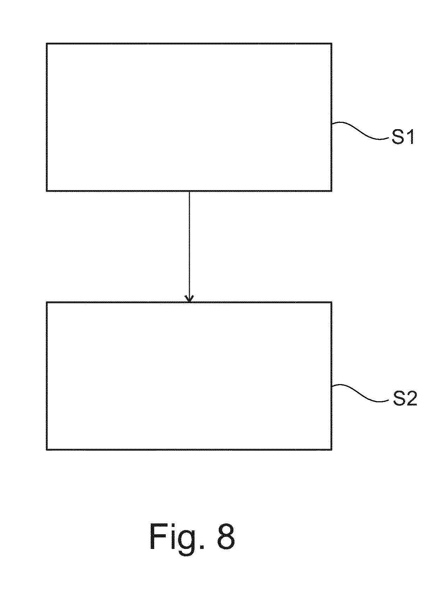

In Fig. 8 a flow diagram for the method for assembling the fuselage is shown. In a first step S1 of the method the secondary structural components and interior components are assembled to form a core structure, the core structure comprising a cargo floor 11, a cabin floor 10, side wall panels 20, ceiling panels 40 and overhead stowage compartments 21. In a next step S2 a primary structure 60 is arranged around the core structure to form a part of the fuselage. The method may comprise other steps like for example manufacturing the cockpit module, the empennage module or the different secondary structural components.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended clams. In the claims the term "comprising" does not exclude other elements, and the indefinite article "a" or "an" does not exclude a plurality. The mere fact that certain measures are recited in mutually different dependant claims does not indicate that a combination of these measures cannot be used to advantage. Any reference signs in the claims should not be construed as limiting the scope of protection.

## Claims

1. Method for assembling an aircraft fuselage, the method comprising the steps:
assembling secondary structural components and interior components to form a core structure, the core structure comprising a cabin floor (10), side wall panels (20) and ceiling panels (40); and
arranging a primary structure (60) around the core structure to form a part of an aircraft fuselage.

2. Method according to claim 1, the core structure further comprising:
a cargo floor (11) which is arranged parallel to the cabin floor (10); and
a plurality of overhead stowage compartments (21) which are connected to the side wall panels (20) and/or to the ceiling panels (40).

3. Method according to anyone of the preceding claims, the core structure further comprising:
an air duct (51),
stiffening segments,
wherein the air duct (51) comprises a stiffening unit in a longitudinal direction of the core structure;
wherein the stiffening segments are arranged in a transversal direction of the core structure.

4. Method according to anyone of the preceding claims, further comprising the step:
attaching an aircraft cockpit module (70) to at least a part of the fuselage.

5. Method according to anyone of claims 2 to 4, further comprising the step:
connecting the cargo floor (11) to the cabin floor (10) by means of several struts (13).

6. Method according to anyone of the preceding claims,
wherein the secondary structural components and the interior components are assembled and/or connected to each other by means of several attachment devices (16).

7. Method according to anyone of the preceding claims,
wherein the secondary structural components and/or the interior components are assembled and/or connected to each other by plug-in connections.

8. Method according to anyone of the preceding claims, further comprising the step:
attaching an insulation layer to the core structure.

9. Method according to claim 8, further comprising the step:
attaching a foam layer to the insulation layer, which foam layer is adapted to receive the primary structure (60) by means of dedicated grooves in the foam layer.

10. Method according to claim 9, further comprising the step:
attaching the primary structure (60) to the foam layer after assembling the secondary structural components and interior components.

11. Method according to anyone of claims 9 to 10,
wherein the primary structure (60) comprises a truss structure, which truss structure is embedded in the dedicated grooves of the foam layer.

12. Method according to anyone of claims 9 to 11,
wherein the primary structure (60) and the foam layer together provide a surface for an outer skin (72), which outer skin (72) comprises several layers which are wrapped around the primary structure (60) and/or the foam layer.

13. Method according to anyone of claims 9 to 11, the method further comprising the steps:
providing a surface for an outer skin (72) by the primary structure (60) and the foam layer;
attaching a plurality of stripes of material which are attached to the outside of the primary structure (60) and/or the foam layer by a tape layer process in order to provide the outer skin (72).

14. Method according to anyone of claims 11 to 13,
wherein the core structure, the primary structure (60), the insulation layer, the foam layer and the outer skin (72) together form the fuselage.

15. Aircraft fuselage assembled by a method according to one of claims 1 to 14.
